Europäisches Patentamt

European Patent Office

Office européen des brevets

(11) Publication number: **0 152 425**
**B1**

(12)

# EUROPEAN PATENT SPECIFICATION

(45) Date of publication of patent specification: **23.11.89**

(51) Int. Cl.⁴: **C 08 F 283/10, C 08 L 63/10**

(21) Application number: **84903005.1**

(22) Date of filing: **20.07.84**

(86) International application number:
**PCT/US84/01157**

(87) International publication number:
**WO 85/00610 14.02.85 Gazette 85/04**

(54) STABLE DISPERSIONS OF ORGANIC POLYMERS IN POLYEPOXIDES.

(30) Priority: **25.07.83 US 517130**

(43) Date of publication of application:
**28.08.85 Bulletin 85/35**

(45) Publication of the grant of the patent:
**23.11.89 Bulletin 89/47**

(84) Designated Contracting States:
**CH DE FR GB LI NL**

(56) References cited:
**FR-A-1 464 337**
**FR-A-2 259 846**
**FR-A-2 343 009**
**JP-A-55 018 401**
**US-A-3 810 855**
**US-A-4 221 697**
**US-A-4 426 243**
**US-A-4 444 923**
**US-A-4 446 258**

(73) Proprietor: **THE DOW CHEMICAL COMPANY**
**2030 Dow Center Abbott Road P.O. Box 1967**
**Midland Michigan 48640-1967 (US)**

(72) Inventor: **HOFFMAN, Dwight, Keith**
**1013 Scott Street**
**Midland, MI 48640 (US)**
Inventor: **ARENDS, Charles, Bradford**
**2204 Westbury Drice**
**Midland, MI 48640 (US)**

(74) Representative: **Sternagel, Hans-Günther, Dr.**
**et al**
**Patentanwälte Dr. Michael Hann Dr. H.-G.**
**Sternagel Sander Aue 30**
**D-5060 Bergisch Gladbach 2 (DE)**

Courier Press, Leamington Spa, England.

**Description**

Polyepoxides, also known as epoxy resins have a spectrum of properties that are well adapted for use in coatings, adhesives, fiber reinforced laminates, composites, engineering plastics, and speciality applications, such as potting resins and mortars. Among those properties are corrosion and solvent resistance, good adhesion and electrical properties, good dimensional stability, hardness, low shrinkage on cure and many other beneficial properties. A major disadvantage has been their brittleness. A published solution to that problem has been the addition of reactive liquid polymers (RLP). These are generally elastomers, such as carboxyl-terminated butadiene - acrylonitrile copolymers, which precipitate out of solution during cure of the polyepoxide. The precipitation results in the formation of discrete elastomer particles or domains which toughen the resin. That technique of toughening the cured resin results in a significantly lowered softening temperature. Particle size is a major factor which determines the mechanical properties. The selectivity and reactivity of the functional groups are critical in the formation of the particles. Also, the curing conditions seriously affect their size and structure. Another disadvantage is that the RLP is limited to low molecular weights for good mixing and low viscosity.

European Patent Application 78,528, teaches compositions for forming epoxy adhesives containing acrylate rubbers. The examples in this publication employ rubbers prepared from butyl acrylate. These rubbers are soluble in the epoxy resins used in the examples at temperatures above 51°C.

FR—A—1,464,337 discloses compatible (soluble) mixtures at ambient temperatures of epoxy resins with the copolymers of polymerizable ethylenically unsaturated monomers. The resin systems of this reference are characterized by exceptional solubility (compatibility).

The gist of this reference is that the polymers which previously have been found insoluble (incompatible) with epoxy resins (by blending) will become very comparable (soluble) when prepared by the process of an in situ vinyl polymerization.

FR—A—2,343,009 also discloses a process for preparing graft copolymers which are soluble (compatible) with the epoxy resin utilized. As described in Example 1 of this reference, the polymer is entirely soluble and the term "clear" is used to describe the products in Examples 2 and 4 indicating that a solution is formed.

US—A—4,221,697 discloses fluid curable compositions comprising a polymerizable organic liquid, inorganic filler particles and a polymeric dispersant whereby the anorganic filler particles are stably dispersed in the polymerizable liquid. It is an essential feature that the solvated component of the polymeric dispersant should remain solvated by or be compatible with the oligomeric or polymeric products which result throughout the course of the curing operation.

Any technique or procedure that could upgrade the toughness of cured polyepoxides without sacrifice of other properties would greatly extend the utility of that class of resins. It is particularly desirable to have better control over particle size, to have more incompatible particles and to have higher heat distortion temperatures. Also, it is desirable to have a more processable polymer-modified polyepoxide which has a lower viscosity than that exhibited by RLP modified polyepoxides.

The present invention provides a stable dispersion of the polymer of an in situ polymerized ethylenically unsaturated monomer in an uncured polyepoxide as a continuous phase wherein the organic polymer remains insoluble in the polyepoxide at a temperature of at least 60°C with or without the presence of a dispersion stabilizer.

The dispersed phase can be prepared by the polymerization of one or more monomers in a step reaction (condensation), in an addition reaction such as a cationic, anionic, or coordination polymerization, or free radical chain addition. Preferably, the dispersion is the polymerizate of an in situ polymerized ethylenically unsaturated monomer. It is also preferred that the dispersion contains a dispersion stabilizer.

Another aspect of the present invention is a process for preparing the stable dispersion of claim 1 which is characterized by the steps of (1) preparing a vinylized adduct by reacting a small amount of a functional monomer with the polyepoxide, (2) preparing a dispersion stabilizer by reacting the vinylized adduct with an ethylenically unsaturated monomer, and (3) preparing the dispersion of the organic polymer by polymerizing an ethylenically unsaturated monomer in the polyepoxide and in the presence of the dispersion stabilizer. Alternatively, steps (2) and (3) are performed at the same time. Also alternatively, the dispersion stabilizer is prepared separately and added to the polyepoxide before or during the addition and polymerization of the ethylenically unsaturated monomer. Preferably (a) the particles of the dispersion do not coagulate or coalesce prior to use or during the curing process; (b) the particles have a controlled particle size; and (c) the dispersions can be stored for reasonable periods without premature curing.

Factors which control the stability of the dispersions of this invention include the viscosity of the polyepoxide (the greater the viscosity, the greater the stability), particle size (the smaller the particle size, the greater the stability), density difference of the phases (the smaller the difference, the greater the stability), tendency of the particles to agglomerate (the lower the tendency, the greater the stability), the presence of a stabilizer and the absence of a flocculant. Stability is also dependent upon the specific combination of polyepoxide and the organic polymer or copolymer.

As taught herein, those skilled in the art will recognize that, if the polymerization of a particular monomer in a given polyepoxide in liquid form does not produce a stable dispersion, stability can be improved by the addition of a dispersion stabilizer or change in the polymerization process.

The dispersions of this invention have the following advantages over solutions of organic polymers in polyepoxides:

(1) The dispersions often have lower viscosities in comparison to polymer solutions at a given solids level.

(2) The dispersions contain less soluble material in the curved matrix which results in higher softening temperatures.

(3) With dispersions, there is better control of the size and distribution of the dispersed particles in the cured matrix.

Any of the known polyepoxides can be employed in the preparation of the resin composition. Useful polyepoxides include polyglycidyl ethers of both polyhydric alcohols and polyhydric phenols, polyglycidyl esters, polyglycidyl amines such as the tetraglycidyl ether of methylene dianiline, polyglycidyl amides, polyglycidyl imides, polyglycidyl hydantoins, polyglycidyl thioethers, epoxidized esters of fatty acids or drying oils, epoxidized polyolefins, epoxidized di-unsaturated acid esters, epoxidized unsaturated polyesters and mixtures thereof so long as they contain on the average more than one epoxide group per molecule. The polyepoxides may be monomeric or polymeric.

Where polyhydric phenols are selected to prepare the polyepoxide, many structural embodiments are possible. Polyepoxides prepared from polyhydric phenols may contain the bisphenol group where the connecting radical is lower alkylene, sulfur, oxygen, carbonyl, or oxides of sulfur. The aromatic rings may be independently substituted with lower alkyl, alkylene, or halides such as chlorine or bromine.

Another class of polyhydric phenols includes mononuclear di- and tri-hydric phenols, such as resorcinol, hydroquinone, catechol, phloroglucinol and pyrogallol.

Yet another class of polyhydric phenols is the novolacs wherein phenols or substituted phenols are linked together with a hydrocarbon group(s).

Another example of a polyepoxide of high functionality is tris(glycidylphenyl)methane.

The polyepoxides referred to as epoxidized diolefins or epoxidized esters of fatty acids are generally made by the known peracid method where the reaction is one of epoxidation of compounds with isolated double bonds at a controlled temperature so that the acid resulting from the peracid does not react with the resulting epoxide group to form ester linkages and hydroxyl groups. Preparation of polyepoxides by the peracid method is described in various periodicals and patents. Such compounds as butadiene polymers, ethyl linoleate, polyunsaturated drying oils or drying oil esters can all be converted to polyepoxides.

An additional class of polyepoxides are epoxidized cycloolefins. These polyepoxides can be prepared by epoxidation of a cyclic olefinic material by known peracid methods.

Examples of polymeric polyepoxides include polymers and copolymers of glycidyl acrylate, glycidyl methacrylate and allylglycidyl ether.

While the invention is applicable to polyepoxides, generally preferred polyepoxides are glycidyl polyethers of polyhydric alcohols or polyhydric phenols having weights per epoxide group of 150 to 20,000. These polyepoxides are usually made by reacting at least about two moles of an epihalohydrin or glycerol dihalohydrin with one mole of the polyhydric alcohol or polyhydric phenol, and a sufficient amount of a caustic alkali to combine with the halogen of the halohydrin. The products are characterized by the presence of more than one epoxide group, i.e., a 1,2-epoxy equivalency greater than one.

Other modifications are well known to those skilled in the art.

The polyepoxide may also include a minor amount of a monoepoxide, such as butyl glycidyl ether, phenyl glycidyl ether, or cresyl glycidyl ether, as a reactive diluent. Such reactive diluents are commonly added to polyepoxide formulations to reduce the working viscosity thereof, and to give better wetting to the formulation. As is known in the art, a monoepoxide affects the stoichiometry of the polyepoxide formulation and adjustments are made in the amount of curing agent and other parameters to reflect that change.

Examples of ethylenically unsaturated monomers which may be employed include butadiene, isoprene, 1,4 - pentadiene, 1,6 - hexadiene, 1,7 - octadiene, styrene, α - methylstyrene, methylstyrene, 2,4 - dimethylstyrene, ethylstyrene, isopropylstyrene, butylstyrene, phenylstyrene, cyclohexylstyrene, and benzylstyrene; substituted styrenes such as chlorostyrene, 2,5 - dichlorostyrene, bromostyrene, fluorostyrene, trifluoro - methylstyrene, iodostyrene, cyanostyrene, nitrostyrene, N,N - dimethylaminostyrene, acetoxylstyrene, methyl - 4 - vinyl - benzoate, phenoxystyrene, p - vinyl diphenyl sulfide, and p - vinylphenyl phenyl oxide; substituted acrylic monomers such as acrylonitrile, methyl methacrylate, cyclohexyl methacrylate, benzyl methacrylate, isopropyl methacrylate, octyl methacrylate, methacrylonitrile, methyl α - chloroacrylate, ethyl α - ethoxyacrylate, methyl α - acetaminoacrylate, butyl acrylate, ethyl acrylate, 2 - ethylhexylacrylate, phenyl acrylate, phenyl methacrylate, α - chloroacrylonitrile, N,N - dimethylacrylamide, N,N - dibenzylacrylamide, N - butylacrylamide, and methacrylyl formamide; vinyl esters, vinyl ethers, vinyl ketones, such as vinyl acetate, vinyl chloroacetate, vinyl butyrate, isopropenyl acetate, vinyl formate, vinyl methoxy acetate, vinyl benzoate, vinyl iodide, vinyl toluene, vinyl naphthalene, vinyl bromide, vinyl chloride, vinyl fluoride, vinylidene bromide, vinylidene chloride, 1 - chloro - 1 - fluoro - ethylene, vinylidene fluoride, vinyl methyl ether, vinyl ethyl ether, vinyl propyl ethers, vinyl butyl ethers, vinyl 2 - ethylhexyl ether, vinyl phenyl ether, vinyl 2 - methoxyethyl ether, methoxybutadiene, vinyl 2 - butoxyethyl ether, 3,4 - dihydro - 1,2 - pyran, 2 - butoxy, 2' - vinyloxy diethyl ether, vinyl 2 - ethylmercaptoethyl ether, vinyl methyl ketone, vinyl ethyl ketone, vinyl phosphonates such as bis(β - chloroethyl)vinyl phosphonate, vinyl phenyl ketone, vinyl ethyl sulfide, vinyl ethyl sulfone, N - methyl - N - vinyl acetamide, N - vinyl - pyrrolidone, vinyl imidazole, divinyl sulfide, divinyl sulfoxide, divinyl sulfone, sodium vinyl sulfonate, methyl vinyl sulfonate, N - vinyl pyrrole, and the like; dimethyl fumarate, dimethyl maleate, monomethyl itaconate, t - butylaminoethyl methacrylate, dimethylaminoethyl methacrylate, allyl alcohol, dichlorobutadiene, and vinyl pyridine. Any of the known polymerizable monomers can be used as long as the criteria for a stable dispersion of this invention are met. The compounds listed above are illustrative and not restrictive of the monomers suitable for use in this invention.

As a general rule, the objectives of the invention are most easily attained when the monomer employed forms a soft polymer measured as a glass transition temperature below use temperature. The presence of a dispersion stabilizer is generally desirable. Representative monomers are the alkyl esters of acrylic and methacrylic acids wherein the alkyl group contains at least 4 carbon atoms and preferably 4 to 8 carbon atoms. Thus, butyl acrylate and 2 - ethylhexyl acrylate are preferred. Other representative monomers are the dienes such as butadiene and isoprene. Yet another useful class of monomers is the vinylized polyoxyalkylenes. Copolymers of such monomers with other comonomers can also be used. For example, styrene and butadiene form a well-known class of elastomers. Most preferred are the monomers forming elastomers.

Although monomers forming polymers having high softening temperatures can be used, the polymers have less beneficial influence on the toughness of the cured dispersions. Such polymers can be employed as might be desired, for example, as pigments or fillers. As stated earlier, it is generally desirable to employ a dispersion stabilizer. However, compositions within the present invention can be formed with hard polymers having a glass transition temperature or crystalline melting point above the polymerization temperature of the polymer and cure temperature of the polyepoxide without the presence of a stabilizer. Polyacrylonitrile is such a polymer.

In yet a further embodiment of the disperse phase, a small amount of a functional monomer having a reactive group in addition to a polymerizable double bond can be included. Illustrative of monomers which have reactive radicals are acrylic acid, methacrylic acid, crotonic acid, itaconic acid, 2 - hydroxyethyl or propylacrylate, 2 - hydroxyethyl methacrylate, t - butylaminoethyl methacrylate, β - isocyanatoethyl methacrylate, glycidyl acrylate, glycidyl methacrylate, glycol monoesters of itaconic acid, methyl monoester of itaconic acid, acrylamide or substituted acrylamides, allyl alcohol, maleic acid, fumaric acid, and isopropenyl phenol. Such monomers can provide sites for subsequent crosslinking or for bonding to the epoxy matrix.

In addition, monomers containing more than one vinyl group can be used at low levels to increase the molecular weight of the dispersed phase. Examples of such comonomers are divinylbenzene, allyl methacrylate or ethylene glycol dimethacrylate.

Polymerization of ethylenically unsaturated monomers is induced and maintained by conventional free radical catalysts and elevated temperatures. The concentration of the catalyst can vary from 0.001 to 10 percent, preferably from 0.2 to 1.0 percent; however, any effective catalytic amount is satisfactory. Illustrative catalysts are the well-known free radical type of vinyl polymerization catalysts, for example, the peroxides, persulfates, perborates, percarbonates, azo compounds, including hydrogen peroxide, dibenzoyl peroxide, acetyl peroxide, benzoyl hydroperoxide, t - butyl hydroperoxide, di - t - butyl peroxide, lauroyl peroxide, butyryl peroxide, diisopropylbenzene hydroperoxide, cumene hydroperoxide, paramenthane hydroperoxide, diacetyl peroxide, di - alpha - cumyl peroxide, dipropyl peroxide, diisopropyl peroxide, isopropyl - t - butyl peroxide, butyl - t - butyl peroxide, dilauroyl peroxide, difuroyl peroxide, ditriphenylmethyl peroxide, bis(p - methoxybenzoyl)peroxide, p - monomethoxybenzyl peroxide, rubrene peroxide, ascaridol, t - butyl peroxybenzoate, diethyl peroxyterephthalate, propyl hydroperoxide, isopropyl hydroperoxide, n - butyl hydroperoxide, t - butyl hydroperoxide, cyclohexyl hydroperoxide, trans-Decalin hydroperoxide, alpha - methylbenzyl hydroperoxide, alpha - methyl - alpha - ethyl benzyl hydroperoxide, Tetralin hydroperoxide, triphenylmethyl hydroperoxide, diphenylmethyl hydroperoxide, alpha, alpha' - azo - 2 - methyl butyronitrile, alpha, alpha' - 2 - methyl heptonitrile, 1,1' - azo - 1 - cyclohexane carbonitrile, dimethyl, alpha, alpha' - azo - isobutyrate, 4,4' - azo - 4 - cyanopentanoic acid, azobisisobutyronitrile, persuccinic acid, and diisopropyl peroxy dicarbonate. A mixture of catalysts may also be used.

The polymerization of the ethylenically unsaturated monomers can also be carried out with an inert organic solvent present. Illustrative thereof are toluene, benzene, acetonitrile, ethyl acetate, hexane, heptane, dicyclohexane, dioxane, acetone, N,N - dimethylformamide, N,N - dimethylacetamide, halogenated solvents and o-xylene, including those known in the art as being suitable solvents for the polymerization of such monomers. The only requirement in the selection of the inert solvent is that it does not substantially interfere with the monomer's polymerization reaction. Any solvent, if used, is removed before curing.

The ethylenically unsaturated polymerization system may optionally contain small amounts of from 0.1 to 2 percent by weight of a chain transfer agent based on the weight of ethylenically unsaturated monomer in the dispersed phase. Alkyl mercaptans having from one to twenty carbon atoms in the alkyl chain may be employed in the present invention. Representative mercaptans include ethyl mercaptan, propyl mercaptan, butyl mercaptan, hexyl mercaptan, octyl mercaptan, decyl mercaptan, dodecyl

4

mercaptan, tetradecyl mercaptan, cetyl mercaptan, and stearyl mercaptan. Other chain transfer agents such as disulfides and halogenated compounds, especially chlorinated, brominated or iodinated compounds, can be used.

The polymerization temperature to be employed will be above the softening point of the polyepoxide and generally above (although not necessarily so) the softening point of the particles of the dispersed phases.

The disperse phase can be in an amount of from 5 to 70 weight percent, preferably 5 to 50 percent, of the total dispersion as long as the polyepoxide is the continuous phase. The optimum concentration of polymeric disperse phase can and will be varied depending upon the materials employed and the end use that is envisaged. The dispersions are usually made at a solids level at which the dispersions are to be used. However, it is possible to prepare higher solids dispersions and dilute to the final solids level.

The dispersions are more easily prepared and have superior stability and other properties when a dispersion stabilizer is included in the composition. In basic essentials, that stabilizer can be any molecule which contains at least two different segments, one compatible with the polyepoxide and one compatible with the polymer particles. The most preferred stabilizer is the reaction product of a vinylized adduct precursor and an unsaturated monomer which may be the same monomer as the dispersed phase.

The vinylized adduct is the reaction product of a functional monomer as described above with a polyepoxide. Preferably, the vinylized adduct is made by reaction of a functional monomer as previously defined which is reactive with an oxirane group. The reactive group may be, for example, carboxyl, phenolic hydroxyl, thiophenolic isocyanato, or amino groups. Such reactivity and methods for reacting those monomers with oxirane groups and the useful reaction parameters are known and judicious selection can be made by reference to the literature and simple preliminary experiment. In this regard, a typical reference is Lee & Neville, *Handbook of Epoxy Resins*, McGraw-Hill, New York, (1967) at Appendix 5-1 and the bibliography in Chapter 5, pages 39 to 40.

The stabilizer is most conveniently prepared in situ in the early stages of the preparation of the dispersion. In that instance a small amount, relative to the amount of polyepoxide, of the unsaturated oxirane-active component is reacted with an amount of epoxy to result in a material having unsaturated groups and oxirane groups. The unsaturated group is further reacted with other ethylenically unsaturated materials to form polymeric stabilizers.

Alternatively, the stabilizer can be made separately and that performed stabilizer added to the epoxy resin before or during addition and polymerization of the vinyl monomer.

The reaction parameters for preparing the product of the oxirane-containing compound with the oxirane reactive compound will vary somewhat with the particular ingredients employed. With polyepoxides and unsaturated carboxylic acids, the useful catalysts include ethyl triphenyl phosphonium acetate, acetic acid complex and other known onium compounds; tertiary amines, such as tris(dimethylaminomethyl)phenol; triphenyl phosphine and other compounds, such as metal salts including chromium chloride and acetate, known to catalyze the epoxy/carboxy reaction.

It is commonplace to add a polymerization inhibitor to the mix to prevent premature polymerization prior to completion of the epoxy/carboxy reaction. Typical process inhibitors are 2,6 - di - tertiary - butyl - 4 - methylphenol, sold commercially as Ionol* antioxidant; p - methoxyphenol, hydroquinone, and tetrahydrothiazine. Inhibitors are also usually employed for the storage of the vinylized adduct.

The properties of the dispersion are influenced by a variety of factors including, for example, the identity of the components, the particle size and concentration of the disperse phase, the hardness or softness of the particles of the disperse phase, and the concentration of the dispersion stabilizer.

For most practical applications, the stability of the dispersion and the property enhancement due to the disperse phase will be optimized with particles that are less than about 20 microns (20 µm).

The dispersions are solidified by curing the polyepoxide. It is known in the curing of polyepoxides that the choice of curing agent can influence the cure rate, the exotherm and resultant properties of the finished product. Curing agents and their influence are known in the literature as, for example, in the book, *Handbook of Epoxy Resins*, (supra) and in *Chemical Reactions of Polymers*, Interscience Publishers, New York, pages 912—926, (1967) and in other reference works. Some of these influences are illustrated in *Modern Plastics Encyclopedia*, pages 33—34, (1982—1983). Therein it is said:

Aliphatic polyamines and derivatives of these amines will cure epoxy resins at room temperature. Some examples include diethylenetriamine, ketimines, cycloaliphatic amines, and polyamides. Pot life, viscosity, toughness, and heat resistance can be influenced by the type of polyamine selected.

Aromatic amines such as 4,4' - methylene dianiline and meta - phenylenediamine are less reactive than aliphatic amines and usually require cure at elevated temperature. These materials offer systems with longer pot lives, and polymers with better performance properties than the aliphatic amines, particularly at elevated temperature.

Acid anhydrides are the second most commonly used curing agents. Some popular acid anhydrides used are methyltetrahydrophthalic anhydride and Nadic methylanhydride. Generally, acid anhydride systems require curing at elevated temperature, but offer the advantages of long pot life and good electrical properties.

---

*Trademark of Shell Chemical Company.

Cures with catalytic curing agents proceed by homopolymerization of the epoxide group. Typical catalysts include dicyandiamide, tertiary amines such as benzyl dimethylamine, and Lewis Acids or Lewis Bases such as boron trifluoridemonoethylamine. These curing agents can provide long room-temperature pot life, rapid cure at elevated temperature, and good performance properties at elevated temperatures.

Melamine-, phenol-, and urea-formaldehyde resin are types of amino and phenoplast resin curing agents which crosslink through the hydroxyl groups of the epoxy resin. These systems are cured at elevated temperature and produce products with good chemical resistance.

The final epoxy resin/curing agent system often can contain one or more additional materials such as accelerators, fillers, reinforcements, and mono- or difunctional glycidyl ether diluents in order to comply with both the fabrication and the final cured product performance requirements.

The cured products have improved toughness over those without the dispersed phase. Also, the heat distortion temperatures are improved over those exhibited by the products obtained by curing a polyepoxide containing dissolved carboxylated rubbers as, for example, carboxy-terminated diene elastomers.

The properties of the cured products are also influenced by the hardness of the dispersed polymer. As a general rule, the best performance is obtained with polymer particles having glass transition temperatures below room temperature. Examples of such polymers are those homo- and copolymers of butyl acrylate, 2 - ethylhexyl acrylate, butadiene, isoprene and vinylized polyalkylene oxide polymers.

The dispersions of this invention are especially well adapted for a variety of high performance, engineering plastic applications in which one or more of the physical properties of polyepoxides has been a limiting factor. In particular, these dispersions are useful in solution, high solids and powder coating compositions; fiber reinforced laminates and composites; casting and molding resins; and adhesives. An additional application is encapsulation of electrical components which are exposed to wide temperature fluctuations.

The concept of the invention is illustrated in the following examples. In the examples, all parts and percentages are by weight unless otherwise specified.

In the Examples

Resin A is a diglycidyl ether of bisphenol A having an epoxide equivalent weight of from 178 to 186 and a viscosity at 25°C of between 9,000 and 11,500 centipoises (9 and 11.5 Pa · s) and sold commercially as D.E.R.® 383 epoxy resin by The Dow Chemical Company.

Resin B is a diglycidyl ether of bisphenol A having an epoxide equivalent weight of from 182 to 190 and a viscosity at 25°C of between 11,000 and 14,000 centipoises (11 and 14 Pa · s) and sold commercially as D.E.R.® 331 epoxy resin by The Dow Chemical Company.

Resin C is a polyglycidyl ether of a novolac of phenol and formaldehyde having an average number of phenols and thus an oxirane functionality of 3.6; an epoxide equivalent weight of from 175 to 182 and a viscosity at 25°C of between 30,000 and 90,000 centipoises (30 and 90 Pa · s), sold commercially as D.E.N.® 438 epoxy novolac by The Dow Chemical Company.

Resin D is a polyglycidyl ether of a novolac of phenol and formaldehyde having an average number of phenols and thus an oxirane functionality of 2.2, an epoxide equivalent weight from 172 to 179 and a viscosity at 25°C of between 1400 and 2000 centipoises (1.4 and 2 Pa · s) sold commercially as D.E.N.® 431 epoxy novolac by The Dow Chemical Company.

Resin E is tris(4 - glycidylphenyl)methane sold as XD-7342.00 by The Dow Chemical Company.

Resin F is a solid diglycidyl ether of bisphenol A having a molecular weight enhancement with bisphenol A to an epoxide equivalent weight of from 730 to 840, a softening range of between 88° and 98°C and sold commercially as D.E.R.® 663U epoxy resin by The Dow Chemical Company.

Resin G is a solid diglycidyl ether of bisphenol A having a molecular weight enhancement with bisphenol A to an epoxide equivalent weight of from 475 to 575, a softening range of between 70° and 80°C and sold commercially as D.E.R.® 661 epoxy resin by The Dow Chemical Company.

Resin H is a solid diglycidyl ether of bisphenol A having a bromine content of 18—20 percent by weight and an epoxide equivalent weight of from 445 to 520, a softening range of between 68° and 80°C and sold commercially as D.E.R.® 511 epoxy resin by The Dow Chemical Company.

In the examples, the following test procedures were used.

1. Particle size was measured directly from scanning electron micrographs of fracture surfaces.

2. Glass temperature was measured by dynamic modulus at 0.1 Hz, performed on Rheometrics Mechanical Spectrometer Model RMS 605; criterion was temperature of maximum loss modulus (G″).

3. Fracture energy ($G_{1c}$) was measured using a double edge notch technique as defined in *Plane Strain Crack Toughness Testing of High Strength Metallic Materials* by W. F. Brown, Jr. and by J. E. Strawley in "ASTM Special Technical Bulletin #410", ASTM, Philadelphia, Pa. (1969).

Example 1

Resin A (1000 g) was charged into a 2-liter, 3-necked, round-bottom flask which was equipped with an addition funnel, stirrer, condenser, thermocouple, and nitrogen sparge. The epoxy resin was heated to 120°C with stirring and a solution of azobisisobutyronitrile (3 g), acrylonitrile (150 g) and Resin A (350 g) was added over a 1-hour period. After heating for an additional 100 minutes at 120°C, the volatiles were

6

removed under vacuum. The final product was a viscous, stable yellow dispersion of hard plastic particles in uncured epoxy resin.

Comparative Run A

Resin B (1000 g) was charged into a reactor as described in Example 1. The resin was heated to 100°C under an air blanket and ethyltriphenyl phosphonium acetate-acetic acid complex (0.5 g of a 70 percent solution in methanol, also referred as A-1 catalyst) and acrylic acid (10 g) was added. The temperature was raised to 120°C over the next 30 minutes. Under a nitrogen blanket, a solution of azobisisobutyronitrile (6 g), butyl acrylate (300 g) and Resin B (200 g) was added over an 80-minute period. After heating for an additional hour at 120°C, the volatiles were removed under vacuum. When heated to 175°C, the product was clear solution; however, upon cooling to room temperature, an opaque dispersion of poly(butyl acrylate) in epoxy resin was obtained. As the clear solution was slowly cooled, a cloud point was observed at 42°C.

Comparative Run B

Resin B (1000 g) was charged into a reactor as described in Example 1. The epoxy resin was heated to 100°C with stirring under air and A-1 catalyst was added. The mixture was heated to 120°C with stirring for a one hour period. Then under a nitrogen sparge, a solution of azobisisobutyronitrile (6 g), 2 - ethylhexyl acrylate (300 g) and Resin B (200 g) was added over a one hour period. After heating for an additional hour at 120°C, the volatiles were removed under vacuum. The product was poured into bottles and allowed to cool.

After the dispersion was stored overnight, the poly(2 - ethylhexyl acrylate) particles coagulate, coalesce, and cream to the surface of the epoxy resin. The results show that the dispersion has poor stability.

Example 2

Resin B (1000 g) was charged into a reactor as described in Example 1. The resin was heated to 100°C with stirring under air and A-1 catalyst (0.5) and acrylic acid (1 g) were added. The temperature was raised to 120°C over the next hour. Under a nitrogen blanket, a solution of azobisisobutyronitrile (6 g), 2 - ethylhexyl acrylate (300 g) and Resin B (200 g) was added over a 75 minute period. After heating for an additional hour at 120°C, the volatiles were removed under vacuum.

After the dispersion was stored overnight, a comparison with the product from Comparative Run B showed that improved stability was obtained by including a dispersion stabilizer in the preparation of the dispersion.

When heated to 247°C, the dispersion of this example remained an opaque dispersion insoluble in the epoxy resin.

In the same manner, the level of acrylic acid was varied using, respectively 5 g, 10 g, 15 g, and 20 g. The stability increases with increasing acrylic acid.

Example 3

Resin B (1000 g) was charged into a reactor and esterified with acrylic acid (10 g) as described in Example 2. A solution of azobisisobutyronitrile (6 g), 2 - ethylhexyl acrylate (300 g), glycidyl methacrylate (1 g) and Resin B (200 g) was added over a 90-minute period. The modified epoxy resin was worked-up as described in Example 2. Upon cooling, the product is a stable dispersion. The glycidyl methacrylate was included as a crosslinking agent for the particle and for bonding the particle to the epoxy matrix.

In the same manner, other dispersions were prepared with increasing levels of glycidyl methacrylate, 2 g, 5 g, and 10 g, respectively.

Example 4

The procedure was essentially the same as described in Example 2 with 10 g of acrylic acid for the esterification except that various levels (3 g, 1.5 g, and 0.75 g) of azobisisobutyronitrile (AIBN) were used as a free radical initiator.

Example 5

Resin D (1200 g) was charged into a reactor as described in Example 1 and heated to 100°C. A-1 catalyst (0.5 g) was added (no methacrylic acid is added) and the resin was heated to 120°C over a 30-minute period. Under a nitrogen blanket, a solution of azobisisobutyronitrile (6 g), 2 - ethylhexyl acrylate (300 g) and glycidyl methacrylate (10 g) was added over a 60-minute period. After maintaining the temperature at 120°C for an additional 60 minutes, the volatiles are removed under vacuum. The final product is a dispersion having a large particle size.

In a similar manner, resin D (1000 g) was charged into a reactor as described in Example 1, and heated to 100°C. A-1 catalyst (0.5 g) and methacrylic acid (MAA) (5.0 g) were added with stirring and the temperature was raised to 120°C over a 30-minute period. Under a nitrogen blanket, a solution of azobisisobutylonitrile (6 g), 2 - ethylhexyl acrylate (300 g), glycidyl methacrylate (10 g) and Resin D (200 g) was added over a 60-minute period. After maintaining the temperature at 120°C for an additional 60 minutes, the volatiles were removed under vacuum. The final product was a stable dispersion having a small particle size.

In the same manner, additional dispersions were prepared using higher levels (10 g and 15 g) of methacrylic acid.

Example 6

(a) Resin A (1000 g) was charged into a reactor as described in Example 1. The resin was esterified with methacrylic acid (5 g) as described in Example 5. Under a nitrogen blanket, a solution of azobisisobutyronitrile (3 g), 2 - ethylhexylacrylate (300 g), glycidyl methacrylate (10 g), divinylbenzene (DVB) (0.5 g) and Resin A was added over a 60-minute period. After heating for an additional hour at 120°C, the volatiles were removed under vacuum. The final product was a stable dispersion having a Brookfield viscosity of 23,600 cps (23.6 Pa · s).

(b) In the same manner, the level of divinylbenzene was varied. Products are also made in Resin B. The divinylbenzene was used to increase the molecular weights of the polymer.

Example 7

Resin A (1100 g) was charged into a reactor as described in Example 1. The resin was esterified with methacrylic acid (15 g) as described in Example 5. Under a nitrogen blanket, a solution of azobisisobutyronitrile (2.7 g), 2 - ethylhexyl acrylate (2-EHA) (133 g), glycidyl methacrylate (2.2 g) and Resin A (100 g) was added over a 60-minute period. The vinyl polymerization was conducted as described in Example 3. The final product was a stable dispersion having a solids content of 10 percent by weight poly(2 - ethylhexyl acrylate) and a Brookfield viscosity of 33,400 cps (33.4 Pa · s).

In a similar manner, additional stable products were made having solids content ranging from 15—50 percent.

Example 8

Resin A (1000 g) was charged into a reactor as described in Example 1. The resin is heated to 100°C under an air blanket and A-1 catalyst (0.5 g) and methacrylic acid (MAA) (1 g) was added. The temperature was raised to 120°C over the next 30 minutes. Under a nitrogen blanket, a solution of azobisisobutyronitrile (1 g), 2 - ethylhexyl acrylate (300 g), glycidyl methacrylate (10 g), and Resin A (200 g) was added over a 60-minute period. After heating for an additional hour at 120°C, the volatiles were removed under vacuum. The product was a dispersion which has a tendency to cream with time although it had better stability than Comparative Run B.

In the same manner, dispersions were prepared using 5.0, 7.0, 7.0, 10.0, 15.0 and 20.0 g of methacrylic acid. Improved stability and smaller particle sizes result with increasing levels of methacrylic acid. The viscosity of the dispersions increased as the level of methacrylic acid increased.

In addition to the dispersion prepared in Example 8 using 10.0 g of methacrylic acid, nine additional solutions and dispersions were prepared using identical process conditions and identical amounts of Resin A, A-1 catalyst, azobisisobutyronitrile, glycidyl methacrylate and alkyl acrylate or methacrylate esters. The esters employed were ethyl acrylate, n-propyl acrylate, sec.-butyl acrylate, n-pentyl acrylate, n-hexyl acrylate, n-octyl methacrylate, isodecyl acrylate, isodecyl methacrylate and lauryl methacrylate. An eleventh sample was prepared using the same process conditions of Example 8 and n-butyl acrylate as the ester. No methacrylic acid, A-1 catalyst or glycidyl methacrylate were employed. The same level of Resin A, n-butyl acrylate and azobisisobutyronitrile were employed.

For these eleven samples, observations were made as to whether or not the organic polymers were soluble in Resin A at 175°C and at room temperature (25°C). Cloud points were noted for the samples prepared from n-butyl acrylate, n-pentyl acrylate and n-hexyl acrylate. The sample prepared from 2-ethyl hexyl acrylate would not dissolve in the polyepoxide even when heated to 247°C.

| Polymer | Soluble at 175°C | Soluble at room temperature | Cloud point, °C |
|---|---|---|---|
| Poly(ethyl acrylate)*) | yes | yes | — |
| Poly(n-propyl acrylate)*) | yes | yes | — |
| Poly(n-butyl acrylate)*) | yes | no | 51 |
| Poly(sec.-butyl acrylate) | yes | no | — |
| Poly(n-pentyl acrylate) | yes | no | 98 |
| Poly(n-hexyl acrylate) | no | no | 176 |
| Poly(n-octyl methacrylate) | no | no | — |
| Poly(2-ethylhexyl acrylate) | no | no | >247 |
| Poly(isodecyl acrylate) | no | no | — |
| Poly(isodecyl methacrylate) | no | no | — |
| Poly(lauryl methacrylate) | no | no | — |

*)Comparative Example, not according to the invention.

Glass transition temperatures ($T_g$), particle size and toughness ($G_{1c}$) were determined for various cured dispersions. The cured dispersions were prepared as follows. The resin or dispersion was heated to 60°C. A stoichiometric quantity of triethylene tetramine at room temperature was added and stirred in quickly. The warm mixture was degassed by evacuating the mixture until rapid evolution of gas ceases. This typically took about 2 minutes. The degassed mixture was then poured into an appropriate mold and allowed to cure under ambient conditions for 16 to 20 hours. Post curing was performed at 150°C for 1 hour.

The cured castings were then machined to sizes and shapes appropriate for the testing.

Various samples from Examples 2—8 were tested according to the previously described procedures with the following results.

For Comparative Runs D and E, the resin employed was Resin A.

9

| Example or Comparative Run | Variable | $T_g$ (°C) | Particle size (mm) | $G_{1c}$ (kJ/m²) |
|---|---|---|---|---|
| For comparison | | | | |
| D | none | 122 | — | 0.25 |
| E | 16.4% CTBN* | 98 | — | 3.08 |
| This invention | | | | |
| 2 | 15 g AA | 109 | 2.8 | 1.96 |
| 2 | 20 g AA | 117 | 1.1 | 1.18 |
| 3 | 1 g GMA | 111 | 2.3 | 0.31 |
| 3 | 2 g GMA | 116 | 3.1 | 1.08 |
| 3 | 5 g GMA | 106 | 2.1 | 1.01 |
| 3 | 10 g GMA | 119 | 3.7 | 0.45 |
| 4 | 3 g AIBN | 110 | 4.3 | 0.55 |
| 4 | 1.5 g AIBN | 116 | 7.0 | 0.61 |
| 4 | 0.75 g AIBN | 116 | 8.5 | 0.42 |
| 5 | 0 g MAA | 120 | 6.2 | 2.01 |
| 5 | 5 g MAA | 97 | 0.44 | 4.82 |
| 5 | 10 g MAA | 111 | 0.13 | 3.59 |
| 5 | 15 g MAA | 116 | 0.11 | 4.99 |
| 6(b) | 0.5 g DVB | 116 | 1.8 | 0.84 |
| 6(b) | 2.0 g DVB | — | — | — |
| 6(b) | 8.0 g DVB | — | 0.62 | 1.33 |
| 6(a) | 0.5 g DVB | 115 | 0.68 | 0.93 |
| 6(a) | 2.0 g DVB | 106 | 0.34 | — |
| 6(a) | 8.0 g DVB | 132 | 0.72 | 0.62 |
| 7 | 10% 2-EHA | 102 | 0.30 | 1.76 |
| 7 | 15% 2-EHA | 103 | 0.40 | 2.25 |
| 7 | 20% 2-EHA | 107 | 0.65 | 1.30 |
| 7 | 30% 2-EHA | 104 | 0.46 | 1.35 |
| 7 | 40% 2-EHA | 119 | 0.56 | 0.76 |
| 8 | 7.0 g MAA | 113 | 0.98 | 1.00 |
| 8 | 9.0 g MAA | 120 | 0.56 | 1.30 |
| 8 | 10.0 g MAA | 121 | 0.50 | 0.89 |

*Weight percent based on resin and rubber; CTBN is carboxyl terminated butadiene - acrylonitrile rubber.

The data show that in general the cured dispersions of the present invention have improved toughness (higher $G_{1c}$) without significant loss in $T_g$.

Example 9

Resin B (1000 g) was charged into a reactor as described in Example 1. The resin was heated to 100°C under an air blanket and lonol* antioxidant (1 g), isopropenyl phenol (5 g) and A-1 catalyst (0.5 g) were added with stirring. The temperature was raised to 120°C over 35 minutes. Under a nitrogen blanket, a solution of azobisisobutyronitrile (6 g), 2-ethylhexyl acrylate (300 g) and Resin B (200 g) was added over a 75-minute period. After heating for an additional hour at 120°C, the volatiles were removed under vacuum. The final product was a stable dispersion having better stability than the product made without the vinylized adduct.

Example 10

Resin E (600 g) was charged into a reactor as described in Example 1. The resin was heated to 100°C under an air blanket and A-1 catalyst (0.5 g) and methacrylic acid (5.0 g) were added with stirring. The temperature was raised to 120°C over the next 30 minutes. Under a nitrogen blanket, a solution of azobisisobutyronitrile (2 g), 2-ethylhexyl acrylate (200 g), glycidyl methacrylate (10 g) and Resin A (200 g) was added over a 45-minute period. After heating for an additional 30 minutes at 120°C, the volatiles were removed under vacuum. The final product was a semi-solid, amber, stable dispersion.

In the same manner, the level of methacrylic acid was varied; 10 g, and 15 g. The particle size decreased as the amount of methacrylic acid was increased.

## Example 11

Resin C (1200 g) was charged into a reactor as described in Example 1. The resin was heated to 100°C under an air blanket and A-1 catalyst (0.5 g) and methacrylic acid (2.5 g) were added with stirring. The temperature was raised to 120°C over the next 30 minutes and held for a total time of 1 hour. Under a nitrogen blanket, a solution of azobisisobutyronitrile (3 g), 2-ethylhexyl acrylate (300 g) and glycidyl methacrylate (10 g) was added over a 60-minute period. After heating for an additional 30 minutes at 120°C, the volatiles were removed under vacuum. The final product was a semi-solid stable dispersion.

In the same manner, the level of methacrylic acid is varied; 10 g, 15 g, and 20 g. The particle size decreased as the amount of methacrylic acid was increased.

## Examples 12 and 13

Resin F (1200 g) was charged into a reactor as described in Example 1. The resin was heated to 150°C under an air blanket and A-1 catalyst (0.5 g) and methacrylic acid (2.5 g) were added with stirring. The temperature was held at 150°C for an additional 60 minutes. Under a nitrogen blanket, a solution of 2 - t - butylazo - 2 - cyanobutane (3 g, Luazo*-82 catalyst, trademark of Lucidol Div. of Pennwalt Corp.), 2-ethylhexyl acrylate (300 g) and glycidyl methacrylate (10 g) was added over a 60-minute period. After heating for an additional hour at 120°C, the volatiles were removed under vacuum. The final product was a stable dispersion in a solid resin.

In the same manner, a dispersion was prepared of a brominated resin by replacing Resin F with Resin H.

## Example 14

Resin B (1000 g) was charged into a reactor as described in Example 1. The epoxy resin was heated to 100°C and isocyanatoethyl methacrylate (10 g) and dibutyltin dilaurate catalyst (0.1 g) were added with mixing. The temperature was raised to 110°C and held for a total of 1 hour. Then, under a nitrogen atmosphere, a solution of azobisisobutyronitrile (3 g), 2-ethylhexyl acrylate (300 g), glycidyl methacrylate (10 g), methacrylic acid (10 g) and Resin B (200 g) was added over an hour. After heating for an additional 30 minutes, the product was stripped under vacuum. The product was a stable dispersion. To half of this dispersion was added A-1 catalyst (0.5 g). The temperature was held at 110°C for an additional 75 minutes. The intent was to catalyze the reaction of the methacrylic acid groups with the glycidyl methacrylate to give crosslinked particles.

## Example 15
### A. Preparation of a Resin A/methacrylic acid master batch

Resin A (924 g) was charged into a reactor as described in Example 1. The epoxy resin was heated to 100°C and methacrylic acid (43.04 g) and A-1 catalyst (0.25 g) were added. The temperature was maintained at 100°C and the reaction rate was followed by titrating excess acid. After 3 hours, the reaction was 99 percent complete. The product was a clear, viscous partial ester of Resin A. This is an example of a vinylized adduct.

### B. Preparation of the dispersion in Resin A

Resin A (885 g) and the above-described partial methacrylic acid ester of Resin A (115 g) were charged into a reactor as described in Example 1.

The contents were heated to 120°C under a nitrogen atmosphere and a solution of azobisisobutyronitrile (3 g), 2-ethylhexyl acrylate (300 g), glycidyl methacrylate (10 g) and Resin A (200 g) was added over a 45-minute period. After heating for an additional 30 minutes, the product was stripped under vacuum. The final product was a stable dispersion.

## Example 16
### A. Preparation of a Resin G/acrylic acid master batch

Resin G (1050 g) was charged into a reactor as described in Example 1. The epoxy resin was heated to 120°C and acrylic acid (15 g), Ionol* antioxidant (1 g) and A-1 catalyst (0.5 g) were added. The temperature was maintained at 120°C for an additional 30 minutes after which the product was poured into metal trays and allowed to cool. The final product was a solid, clear, partial ester resin that was broken up and bottled. This is an example of a vinylized adduct.

### B. Preparation of the dispersion in Resin B

Resin B (700 g) and the above-described partial acrylic acid ester of Resin G (300 g) were charged into a reactor as described in Example 1.

The contents were heated to 120°C under a nitrogen atmosphere and a solution of azobisisobutyronitrile (6 g), 2-ethylhexyl acrylate (300 g), glycidyl methacrylate (10 g) and Resin A (200 g) was added

11

over a 45-minute period with mixing. After heating for an additional hour at 120°C, the product was stripped under vacuum. The final product was a stable dispersion. The product had a smaller particle size than if an equal amount of acrylic acid had been used to cap a lower molecular weight Resin B.

In the same manner, other dispersions were prepared and the initial amounts of Resin B and acrylic acid-capped Resin G are varied; 800 g Resin B and 200 g acrylic acid-capped Resin G and 900 g Resin B and 100 g acrylic acid-capped Resin G. The partial size increased as the amount of acrylic acid-capped Resin G was decreased.

Example 17

A. Preparation of a Resin A/methacrylic acid master batch

Resin A (1848 g) and Ionol* antioxidant (0.2 g) were charged into a reactor as described in Example 1. The epoxy resin was esterified with methacrylic acid (86 g) as described in Example 16, Paragraph A.

B. Preparation of a polymer epoxy dispersant

Resin A (200 g) was charged into a reactor as described in Example 1. The epoxy resin was heated to 110°C and under a nitrogen blanket a solution of azobisisobutyronitrile (1.25 g), 2-ethylhexyl acrylate (250 g) and the above-described partial methacrylic acid ester of Resin A (800 g) was added over 1 hour while mixing. After heating for an additional 5 hours and 15 minutes, the product was stripped under vacuum. The product was a cloudy, viscous liquid polymeric dispersant.

C. Preparation of the dispersion in Resin A

Resin A (760 g) and the dispersant described in Paragraph B above (300 g) were charged into a reactor as described in Example 1. The contents were heated to 105°C under a nitrogen atmosphere and a solution of azobisisobutyronitrile (1.25 g), 2-ethylhexyl acrylate (240 g), glycidyl methacrylate (10 g) and Resin A (200 g) was added over an hour. After heating for an additional 30 minutes at 105°C, the product was stripped under vacuum. The final product was a stable dispersion.

**Claims**

1. A stable dispersion of the polymer of an in situ polymerized ethylenically unsaturated monomer in an uncured polyepoxide as a continuous phase wherein the organic polymer remains insoluble in the polyepoxide at a temperature of at least 60°C, with or without the presence of a dispersion stabilizer.

2. The dispersion of claim 1, characterized in that the ethylenically unsaturated monomer is an alkyl acrylate or alkyl methacrylate, the alkyl group having at least 4 carbon atoms.

3. The dispersion of claim 1, characterized in that the dispersion contains a dispersion stabilizer.

4. The dispersion of claim 3, characterized in that the dispersion stabilizer is the polymerizate of at least one vinyl monomer and a vinylized adduct of a polyepoxide.

5. The dispersion of claim 4, characterized in that the vinylized adduct of a polyepoxide is the reaction product of a functional monomer and a polyepoxide.

6. A process for preparing the stable dispersion of claim 1, characterized by the steps of (1) preparing a vinylized adduct by reacting a small amount of a functional monomer with the polyepoxide, (2) preparing a dispersion stabilizer by reacting the vinylized adduct with an ethylenically unsaturated monomer, and (3) preparing the dispersion of the organic polymer by polymerizing an ethylenically unsaturated monomer in the polyepoxide and in the presence of the dispersion stabilizer.

7. The process of claim 6, characterized in that steps (2) and (3) are performed at the same time.

8. The process of claim 6, characterized in that the dispersion stabilizer is prepared separately and added to the polyepoxide before or during the addition and polymerization of the ethylenically unsaturated monomer.

**Patentansprüche**

1. Stabile Dispersion des Polymeren eines in-situ polymerisierten ethylenisch ungesättigten Monomeren in einem ungehärteten Polyepoxid als kontinuierlicher Phase, wobei das organische Polymer im Polyepoxid bei einer Temperatur von mindestens 60°C unlöslich bleibt, in Gegenwart oder ohne eine Dispersionsstabilisator.

2. Dispersion nach Anspruch 1, dadurch gekennzeichnet, daß das ethylenisch ungesättigte Monomer ein Alkylacrylat oder Alkylmethacrylat ist, dessen Alkylgruppe mindestens 4 Kohlenstoffatome aufweist.

3. Dispersion nach Anspruch 1, dadurch gekennzeichnet, daß die Dispersion einen Dispersionsstabilisator enthält.

4. Dispersion nach Anspruch 3, dadurch gekennzeichnet, daß der Dispersionsstabilisator ein Polymerisat von mindestens einem Vinylmonomer und einem vinylierten Adduct eines Polyepoxids ist.

5. Dispersion nach Anspruch 4, dadurch gekennzeichnet, daß das vinylierte Adduct eines Polyepoxids das Reaktionsproduct eines funktionellen Monomers mit einem Polyepoxid ist.

6. Verfahren zum Herstellen einer stabilen Dispersion nach Anspruch 1, gekennzeichnet durch die Schritte (1) Herstellen eines vinylierten Adducts durch Umsetzen einer kleinen Menge eines funktionellen Monomers mit einem Polyepoxid, (2) Herstellen eines Dispersionsstabilisators durch Umsetzen des vinylierten Adducts mit einem ethylenisch ungesättigten Monomer und (3) Herstellen der Dispersion des organischen Polymers durch Polymerisieren eines ethylenisch ungesättigten Monomers in dem Polyepoxid in Gegenwart des Dispersionsstabilisators.

7. Verfahren nach Anspruch 6, dadurch gekennzeichnet, daß die Schritte (2) und (3) gleichzeitig ausgeführt werden.

8. Verfahren nach Anspruch 6, dadurch gekennzeichnet, daß der Dispersionsstabilisator getrennt hergestellt und dem Polyepoxid zugesetzt wird vor oder während der Zugabe und Polymerisation des ethylenisch ungesättigten Monomeren.

## Revendications

1. Une dispersion stable du polymère d'un monomère à insaturation éthlénique polymérisé in situ dans un polyépoxyde non durci constituant une phase continue, dans laquelle le polymère organique reste insoluble dans le polyépoxyde à une température d'au moins 60°C, avec ou sans la présence d'un stabilisant de dispersion.

2. La dispersion de la revendication 1, caractérisée en ce que le monomère à insaturation éthylénique est un acrylate d'alkyle ou un méthacrylate d'alkyle, le groupement alkyle comportant au moins 4 atomes de carbone.

3. La dispersion de la revendication 1, caractérisée en ce que la dispersion contient un stabilisant de dispersion.

4. La dispersion de la revendication 3, caractérisée en ce que le stabilisant de dispersion est le polymérisat d'au moins un monomère vinylique et d'un produit d'addition vinylé d'un polyépoxyde.

5. La dispersion de la revendication 4, caractérisée en ce que le produit d'addition vinylé d'un polyépoxyde est le produit de la réaction entre un monomère functionel et un polyépoxyde.

6. Un procédé pour préparer la dispersion stable de la revendication 1, caractérisé par les étapes de (1) préparation d'un produit d'addition vinylé par réaction d'une petite quantité d'un monomère fonctionnel avec le polyépoxyde, (2) préparation d'un stabilisant de dispersion par réaction du produit d'addition vinylé avec un monomère à insaturation éthylénique et (3) préparation de la dispersion du polymère organique par polymérisation d'un monomère à insaturation éthylénique dans le polyépoxyde et en présence du stabilisant de dispersion.

7. Le procédé de la revendication 6, caractérisé en ce que les étapes (2) et (3) sont réalisées simultanément.

8. Le procédé de la revendication 6, caractérisé en ce que le stabilisant de dispersion est préparé séparément et ajouté au polyépoxyde avant ou pendant l'addition et la polymérisation du monomère à insaturation éthylénique.